Europäisches Patentamt

European Patent Office

Office européen des brevets

(19)

(11) Numéro de publication: **0 158 859**
**B1**

(12) **FASCICULE DE BREVET EUROPEEN**

(45) Date de publication du fascicule du brevet: **03.10.90**

(51) Int. Cl.⁵: **B 23 H 7/02**

(21) Numéro de dépôt: **85103393.6**

(22) Date de dépôt: **22.03.85**

(54) Machine pour découpage par électroérosion avec immobilisation de la chute.

(30) Priorité: **18.04.84 CH 2017/84**

(43) Date de publication de la demande:
**23.10.85 Bulletin 85/43**

(45) Mention de la délivrance du brevet:
**03.10.90 Bulletin 90/40**

(84) Etats contractants désignés:
**DE FR GB**

(56) Documents cités:
**DE-A-3 309 624**

(73) Titulaire: **CHARMILLES TECHNOLOGIES S.A.**
**rue du Pré-de-la-Fontaine 8-10**
**CH-1242 Satigny (CH)**

(72) Inventeur: **Wavre, Alain**
**35, Avenue de Budé**
**CH-1202 Genève (CH)**

(74) Mandataire: **Blum, Rudolf Emil Ernst**
**c/o E. Blum & Co Patentanwälte Vorderberg 11**
**CH-8044 Zürich (CH)**

Courier Press, Leamington Spa, England.

## Description

Lorsqu'une découpe est effectuée selon une trajectoire fermée (par exemple lors de l'usinage d'une matrice ou d'un poinçon), le poids de la partie de la pièce se trouvant à l'intérieur de cette trajectoire provoque en fin de découpe des tensions internes importantes qui sont la cause de défauts d'usinage. D'autre part, la chute de cette partie découpée à l'instant où l'usinage est terminé peut causer des dégâts et doit donc être évitée. De nombreuses méthodes et dispositifs sont déjà connus pour résoudre ce problème, par exemple au moyen d'un support amovible sous cette partie (publications japonaises 57-126926, 57-126932, 57-126933 et 57-126934) ou au moyen d'un support fixe muni d'une fente dans laquelle passe le fil et sur lequel glisse la pièce à usiner dans une direction perpendiculaire à cette fente (DE 634 499), ou encore au moyen de plusieurs bras-supports mobiles disposés sous la pièce à usiner et entraînés en rotation au cours de l'usinage (DOS 33 09 624). La première de ces solutions ne résout que partiellement le problème tandis que les autres solutions présentent l'inconvénient d'utiliser un support glissant qui doit soutenir la pièce avec une grande précision, ce qui exige un mécanisme encombrant et coûteux ainsi qu'une surface inférieure de la pièce absolument plane.

L'invention à pour but d'éliminer ces inconvénients et cette limitation.

A cet effet, la machine selon l'invention est caractérisée comme il est dit à la revendication 1.

Cet agencement permet pendant tout l'usinage une immobilisation réciproque et permanente des deux parties destinées à être séparées par le découpage, sans que le fil ou ses têtes de guidage entrent en collision avec les supports servant à immobiliser la pièce par rapport à la chute.

L'invention sera maintenant illustrée par des exemples de réalisation et à l'aide du dessin, dans lequel

les figures 1A et 1B représentent schématiquement en perspective deux formes d'exécution de l'invention,

la figure 2 représente le principe de la commande des moteurs de la machine de la figure 1A par une installation de commande numérique,

la figure 3 illustre le principe d'une découpe le long d'une trajectoire fermée d'un élément soutenu par un support central, la pièce à découper étant soutenue par un unique bridage latéral, et

la figure 4 représente une variante de la figure 3, où la pièce à découper est soutenue par deux bridages placés sur des côtés opposés.

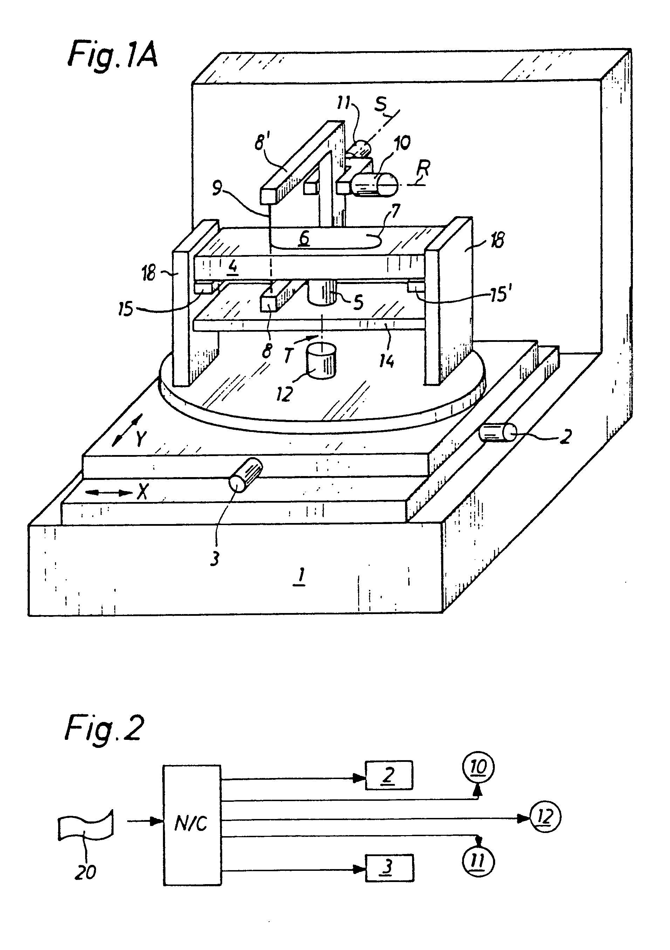

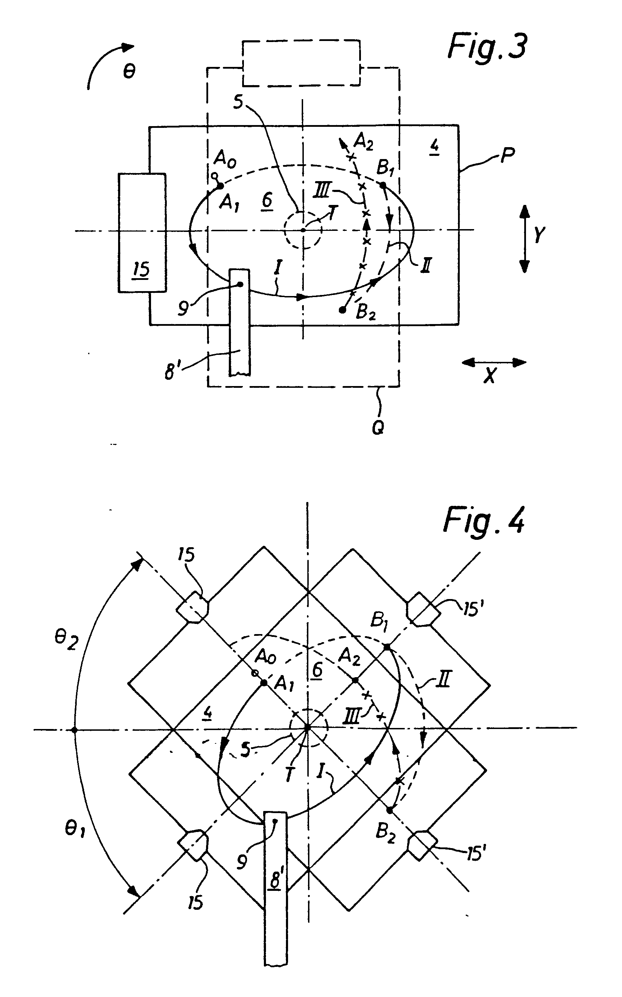

Dans l'exemple de la figure 1A, l'ensemble de la machine repose sur un bâti 1. Celui-ci supporte une table à mouvements croisés commandée par des moteurs 2 et 3 permettant des translations dans les directions des doubles flèches X et Y, parallèlement au plan de découpe. La pièce à découper 4 est maintenue sur la table par l'intermédiaire d'un plateau rotatif d'axe de rotation T perpendiculaire au plan de découpe et dont la rotation est commandée par un moteur esquissé en 12. Une colonne 5 portée par le second plateau est fixée sous la pièce à découper 4 de manière à soutenir celle-ci pendant l'usinage. La colonne 5 forme ainsi un support de la pièce à découper 4, respectivement de l'élément 6 destiné à en être découpé et qui peut selon les cas soit simplement reposer sur la colonne 5 soit y être fixé, par exemple par collage. Dans les deux cas, la colonne 5 évite que lorsque la trajectoire de découpage 7 est presque refermée sur elle-même vers la fin de l'usinage, le poids de l'élément 6 soit supporté uniquement par le petit isthme reliant encore cet élément 6 au reste de la pièce 4, ce qui conduirait à des déformations indésirables au voisinage de cet isthme. Lorsque le découpage est terminé, et la trajectoire 7 donc fermée, la colonne 5 empêche l'élément usiné 6 de tomber, évitant ainsi des dommages parfois appréciables, en particulier lorsque cet élément usiné est lourd. La colonne 5 elle-même est fixée, par l'intermédiaire d'une plaque 14, à deux flasques 18 tandis que la pièce 4 est fixée à ces mêmes flasques par des bridages esquissés en 15 et en 15'. Des bras 8, 8' montés à la Cardan autour de deux axes mutuellement orthogonaux R et S portent chacun une tête de guidage pour le fil 9 servant au découpage. Des moteurs 10 et 11 servent à contrôler la position angulaire du fil par rapport au bâti 1 de la machine, et par conséquent par rapport à la pièce à usiner 4 pendant l'usinage, tandis que les translations dans les directions X et Y servant à faire parcourir au fil 9 la trajectoire de découpe 7 dans la pièce 4 de la manière usuelle lors d'un usinage par électroérosion. La rotation autour de l'axe T permet de faire parcourir au fil 9 une trajectoire fermée 7 dans la pièce 4 sans que le bras 8 n'entre en collision avec la colonne 5 qui soutient la pièce, ainsi qu'il est montré ci-après lors de la description des figures 3 et 4.

La figure 2 esquisse de façon évidente le principe de la commande numérique des moteurs à partir d'un support d'information 20. Selon les informations enregistrées sur ce support, la commande agit, de façon connue dans le métier, sur les moteurs 2, 3, 10 et 11 pour amener le fil 9 à découper la pièce 4 de la façon voulue. Le moteur 12, par contre, est utilisé en conjunction avec les moteurs 2 et 3 pour éviter une collision du bras inférieur 8 avec la colonne 5 lorsque le fil 9 doit parcourir une trajectoire fermée dans la pièce 4.

La figure 3 illustre l'exécution d'une telle découpe en forme d'ellipse dans la pièce 4 lorsque celle-ci est maintenue par un seul bridage latéral 15, c'est-à-dire en l'absence du bridage 15' de la figure 1A. En effet, ce second bridage peut s'avérer superflu dans certaines conditions, par exemple pour des pièces suffisamment petites ou légères. Comme dans la figure 1A, la partie 6 qu'il s'agit de découper est soutenue par un support 5 calé sous cette partie pour éviter sa chute à la fin du découpage. Au début du découpage, la pièce 6 se trouve dans la position P indiquée en traits pleins dans la figure 3. On fait alors passer le fil par l'avant-trou $A_o$ et après avoir découpé jus-

qu'en $A_1$, on effectue une première découpe selon la trajectoire I allant de $A_1$ à $B_1$. Pendant cette découpe, la pièce 4 est maintenue sensiblement dans l'orientation indiquée en traits pleins dans la figure 3, c-est-à-dire que l'on effectue essentiellement des translations dans les directions X et Y et uniquement de légères rotations autour des axes R et S de la figure 1A, rotations destinées à donner les inclinaisons voulues aux flancs de l'élément à découper 6. Lorsque le fil atteint la position $B_1$, la pièce est déplacée en rotation d'un angle $\theta$ de préférence égal à 90° autour de l'axe T de la figure 1A, axe qui est normal au plan de la figure 3 et dont on a supposé—pour la clarté du dessin—qu'il est coaxial avec la colonne 5 et qu'il traverse le plan du dessin au centre de l'ellipse. Il importe de noter que cette position particulière n'est aucunement indispensable mais choisie uniquement pour simplifier le dessin. La colonne 5 peut d'ailleurs fort bien ne pas être placée sous le centre de gravité de la pièce 4, bien que cet emplacement soit évidemment privilégié. Au cours d'une simple rotation de la pièce 4 autour de l'axe T, sans aucune translation auxiliaire, le point $B_1$ se déplacerait par rapport aux tables à mouvements croisés de la figure 1A le long d'un arc de cercle II jusqu'en $B_2$. Comme le fil doit rester immobile par rapport à la pièce pendant la rotation, la commande numérique N/C de la figure 2 devra commander les moteurs 2 et 3 de manière à produire des translations assurant que le point $B_1$ de la pièce 4 reste immobile par rapport au fil pendant toute la rotation. Si le fil n'est pas perpendiculaire mais incliné par rapport à la table croisée, il sera de plus nécessaire de mintenir constante son orientation par rapport à la pièce lors de la rotation de cette dernière autour de l'axe T. Cette orientation constante peut être obtenue par une action adéquate de la commande numérique N/C sur les moteurs 10 et 11 (figure 2).

Après la rotation de 90° autour de l'axe T, la pièce 4 se trouvera en la position Q indiquée en pointillé dans la figure 3 et il ne restera plus qu'à terminer la découpe le long de la trajectoire III allant de $B_2$ à $A_2$. Cette trajectoire est aisément déterminée par rotation de 90° de la trajectoire $B_1$, $A_1$ qui restait à parcourir avant le passage de la position P à la position Q. On voit qu'au cours de l'usinage le bras inférieur 8 (situé en-dessous du bras 8' dans la figure 3) ne touche ni la colonne 5 ni le bridage 15, même si on suppose que celui-ci se prolonge verticalement vers le bas jusqu'à un niveau inférieur à celui du bras 8.

La figure 4 est similaire à la figure 3 et porte les mêmes chiffres de référence pour des éléments équivalents, mais ici la pièce 6 est maintenue en place par deux bridges latéraux 15, 15' situés à deux extrémités opposées de la pièce, comme cela est nécessaire pour les pièces de grandes dimensions. On suppose ici aussi que la position de repos de la pièce 4 (non montrée au dessin) est telle que son petit axe est parallèle aux bras supportant le fil 9. Avant de commencer la découpe, on fait tourner la pièce de l'angle $\theta_1$

autour de l'axe T. On effectue ensuite la découpe selon la trajectoire I allant de $A_0$ à $A_1$ puis à $B_1$. Après cela, on effectue une rotation de 90° en sens inverse de la première amenant ainsi la pièce 4 en une position orientée à $\theta_2$ au-delà de la position de repos. Pendant cette seconde rotation, la table croisée est mue de façon à ce que la position du fil et son orientation longitudinale par rapport à la pièce 4 restent constamment inchangées, comme il a été expliqué pour la réalisation de la figure 3. Ensuite, l'usinage est repris le long de la trajectoire III allant de $B_2$ à $A_2$ et qui est l'image obtenue par une rotation de 90° de la trajectoire $B_1$ $A_1$. Comme auparavant, aucune collision des bras 8, 8' ni avec la colonne 5, ni avec les bridages 15, 15' ou leurs prolongations verticales vers le haut ou le bas n'a lieu pendant la découpe.

Il est à remarquer que la décomposition décrite ci-dessus de l'usinage en trois étapes totalement distinctes, à savoir deux opérations de découpage par érosion et un réajustement des positions relatives de la pièce à découper et des bras supportant le fil n'est pas indispensable. Il est également concevable de synchroniser les deux mouvements nécessaires, l'un pour l'érosion elle-même et l'autre pour éviter tout contact entre les organes soutenant la pièce et les bras portant le fil, de façon à ce qu'ils aient lieu simultanément, ce qui évite toute discontinuité au cours de l'usinage. Le choix de l'une ou l'autre alternative dépend de considérations pratiques.

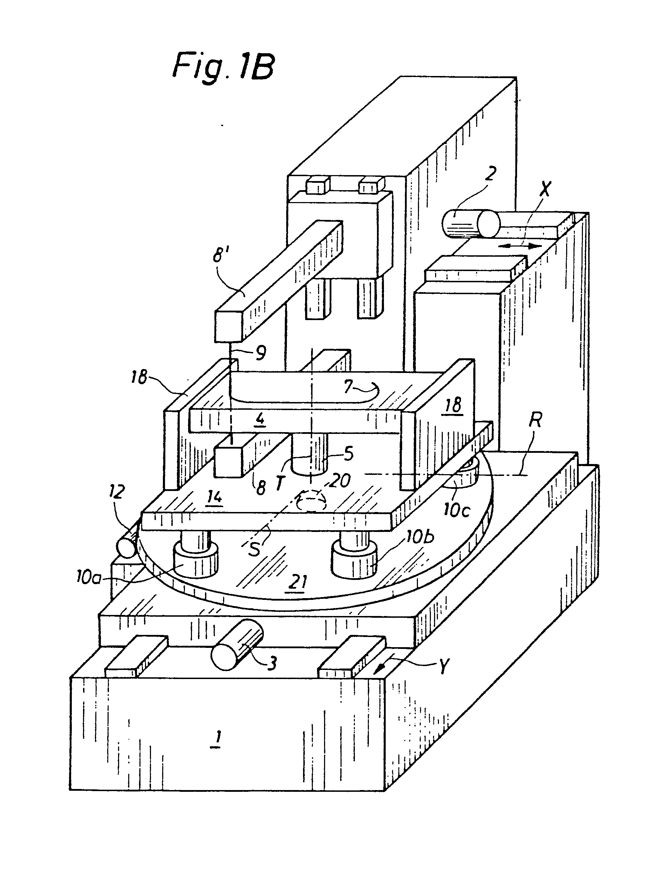

Il est à remarquer que le montage à la Cardan des bras 8 et 8' supportant le fil de la figure 1A pourrait être remplacé par un plateau supportant la pièce à découper et dont l'inclinaison serait obtenue par au moins trois vérins à section verticale du type hydraulique ou électrique. Pour limiter les efforts à fournir pas ces vérins le plateau pourrait par exemple être supporté par une rotule centrale. Ceci est illustré par la figure 1B où les signes de référence désignant des éléments analogues à ceux de la figure précédente restent les mêmes. Ces éléments et leur fonction ne seront donc pas décrits à nouveau ici. Contrairement à la solution illustrée par la figure 1A, les changements d'orientation de la pièce à découper 4 par rapport au fil 9 sont ici obtenus par l'action de vérins 10a, 10b et 10c qui permettent de basculer la plaque de support 14 autour d'une rotule 20 et de la maintenir avec précision dans une orientation donnée. Les vérins sont portés par une plaque 21 dont la rotation est commandée par le moteur 12 qui a la même fonction que dans la figure 1A. La plaque 21 est mûe dans la direction Y par un moteur 3, le déplacement relatif en direction X entre la pièce à découper 4 et le fil 9 étant obtenu par l'action du moteur 2.

**Revendications**

1. Machine pour découper par électroérosion une pièce électrode (4) selon une trajectoire fermée, au moyen d'un fil électrode (9) tendu entre

**EP 0 158 859 B1**

deux têtes de guidage (8, 8'), avec au moins deux supports (5, 15, 15') pour tenir en place de façon permanente respectivement la partie de la pièce extérieure à la trajectoire de découpe (7) et la partie (6) de la pièce intérieure à cette trajectoire, et des moyens (2, 3) pour effectuer des déplacements relatifs en translation des têtes de guidage du fil et des supports de la pièce dans deux directions parallèles au plan de découpe, caractérisée en ce qu'elle comporte des moyens (12) pour effectuer des déplacements angulaires relatifs des deux supports de la pièce autour d'un axe (T) de réorientation perpendiculaire au plan de découpe, et un circuit de commande pour coordonner les déplacements en translation et angulaires de façon à mouvoir en cours de découpe le point de découpe en sens contraire à celui de la trajectoire de découpe afin d'éviter une collision entre l'une des têtes de guidage et les supports.

2. Machine selon la revendication 1, caractérisée en ce que le circuit de commande est agencé pour coordonner les déplacements en translation et en rotation de manière à effectuer une première partie de la trajectoire de découpe avec une première orientation des supports et le reste de cette trajectoire avec une seconde orientation de ces supports.

3. Machine selon l'une des revendications 1 ou 2, caractérisée en ce que l'axe (T) de réorientation est porté par au moins un des moyens pour effectuer les déplacements relatifs en translation.

4. Machine selon l'une des revendications précédentes, caractérisée en ce que le support (5) de la partie (6) de la pièce (4) intérieure à la trajectoire de découpe (7) est traversé par l'axe (T) de réorientation.

5. Machine selon l'une des revendications précédentes, caractérisée en ce que l'axe (T) de réorientation est coaxial au support (5) de la partie (6) de la pièce (4) intérieure à la trajectoire de découpe (7).

6. Machine selon la revendication 1, caractérisée en ce que les têtes (8, 8') de guidage du fil sont portées par deux bras (8, 8') montés à la cardan autour de deux axes orthogonaux.

7. Machine selon la revendication 1, caractérisée en ce que les deux supports (18) de la pièce (4) reposent sur un plateau rotatif (14) dont l'inclinaison est obtenue par au moins trois vérins (10a, 10b, 10c).

**Patentansprüche**

1. Maschine, um ein als Elektrode verwendetes Werkstück (4) durch Elektroerosion und mittels eines zwischen zwei Führungsköpfen (8, 8') gespannten Elektrodendrahtes (9) längs einer geschlossenen Bahn zu schneiden, mit mindestens zwei Stützträgern (5, 15, 15'), um sowohl den ausserhalb der Bahn (7) liegenden Teil des Werkstückes, wie auch sein innerhalb derselben befindlichen Teil (6) ständig festzuhalten, sowie mit Mitteln (2, 3) um gegenseitige relative Verschiebungen der Führungsköpfe und der Tragstützen in zwei zur Schneid-Ebene parallelen Richtungen zu bewirken, gekennzeichnet durch Mittel (12), um gegenseitige Drehbewegungen beider Träger des Werkstückes um eine zur Schneid-Ebene senkrechte Umorientierungs-Achse (T) zu bewirken, sowie durch eine Steuerungs-Schaltung, um die Verschiebungs- und die Dreh-Bewegungen so zu koordinieren, dass sich der Schnitt-Punkt derart in der zur Bewegung der Schnitt-Bahn entgegengesetzten Richtung bewegt, dass ein Zusammenstoss zwischen einem Führungskopf und den Tragstützen vermieden wird.

2. Maschine nach Anspruch 1, dadurch gekennzeichnet, dass die Steuerungs-Schaltung eingerichtet ist, um die Verschiebungs- und die Dreh-Bewegungen so zu koordinieren, dass ein erster Teil der Schnitt-Bahn mit einer ersten Orientierung der Tragstützen, und der restliche Teil dieser Bahn mit einer zweiten Orientierung der Stützträger durchgeführt wird.

3. Maschine nach einem der Ansprüche 1 oder 2, dadurch gekennzeichnet, dass die Umorientierungsachse (T) durch mindestens eines der für die Durchführung der relativen Verschiebungen vorgesehenen Mittel getragen wird.

4. Maschine nach einem der vorangehenden Ansprüche, dadurch gekennzeichnet, dass der Stützträger (5) des im Inneren der Schnitt-Bahn (7) befindlichen Teils (6) des Werkstückes (4) von der Umorientierungsachse (T) durchdrungen wird.

5. Maschine nach einem der vorangehenden Ansprüche, dadurch gekennzeichnet, dass die Umorientierungsachse (T) co-axial mit dem Träger (5) des im Inneren der Schnitt-Bahn (7) befindlichen Teils (6) des Werkstückes (4) ist.

6. Maschine nach Anspruch 1, dadurch gekennzeichnet, dass die Führungsköpfe (8, 8') durch zwei Arme (8, 8') getragen werden, die auf zwei zueinander senkrechte Achsen kardanisch aufgehängt sind.

7. Maschine nach Anspruch 1, dadurch gekennzeichnet, dass die beiden Stützträger (18) des Werkstückes (4) auf einer Drehscheibe (14) ruhen, deren Neigung durch mindestens drei Hubkolben (10a, 10b, 10c) erzeugt wird.

**Claims**

1. Machine for cutting out an electrode piece (4) along a closed path by electroerosion by means of an electrode wire (9) tensioned between two guide heads (8, 8'), with at least two supports (5, 15, 15') for respectively keeping permanently in place that part of the piece outside the cutting path (7) and that part (6) of the piece inside this path, and means (2, 3) for executing relative translational movements of the guide heads for the wire and of the supports of the piece in two directions parallel to the cutting plane, characterized in that it comprises means (12) for executing relative angular movements of the two supports of the piece about a reorientation axis (T) perpendicular to the cutting plane, and a control circuit for co-ordinating the translational and angular movements in order, during cutting, to move the cutting point in the opposite direction to that of the cutting path, so as to prevent a collision between one of the guide heads and the supports.

2. Machine according to Claim 1, characterized in that the control circuit is designed to coordinate the translational and rotational movements so as to execute a first part of the cutting path with a first orientation of the supports and the rest of this path with a second orientation of these supports.

3. Machine according to one of Claims 1 or 2, characterized in that the reorientation axis (T) is carried by at least one of the means for executing the relative translational movements.

4. Machine according to one of the preceding claims, characterized in that the support (5) of that part (6) of the piece (4) inside the cutting path (7) has the reorientation axis (T) passing thorugh it.

5. Machine according to one of the preceding claims, characterized in that the reorientation axis (T) is coaxial relative to the support (5) of that part (6) of the piece (4) inside the cutting path (7).

6. Machine according to Claim 1, characterized in that the guide heads (8, 8') for the wire are carried by two arms (8, 8') gimbal-mounted about two orthogonal axes.

7. Machine according to Claim 1, characterized in that the two supports (18) of the piece (4) rest on a rotary plate (14), the inclination of which is obtained by means of at least three jacks (10a, 10b, 10c).

*Fig.1A*

11
S
8'
10
R
9
7
6
18
18
4
15
5
15'
8
T
14
12
Y
2
X
3
1

*Fig.2*

2
10
N/C
12
20
3
11

Fig. 1B

Fig.3

Fig.4